# EUROPEAN PATENT APPLICATION

(11) **EP 2 325 371 A2**
(43) Date of publication of application: **25.05.2011**
(21) Application number: 10190184.1
(22) Date of filing: 05.11.2010
(51) Int. Cl.: D06F 37/26

(54) **Bush member for rotating shaft of washing machine, washing machine having the bush member and manufacturing method of the bush member and the washing machine**

(30) Priority: 24.11.2009 KR 20090113645
(71) Applicant: Samsung Electronics Co., Ltd., Suwon-si, Gyeonggi-do 506-762 (KR)
(72) Inventor: Kim, Young Jae, Incheon (KR); Lee, Kyu Chai, Gyeonggi-do (KR); Lee, Hong Yeol, Gyeonggi-do (KR)
(74) Representative: Grünecker, Kinkeldey, Stockmair & Schwanhäusser Anwaltssozietät

(57) **Abstract**

A bush member (100) for a rotating shaft (30) of a washing machine (1) wherein a manufacturing process of the bush member (100) is simplified and the bush member (100) has a small thickness, a washing machine (1) having the bush member (100), and a manufacturing method of the bush member (100) and the washing machine (1). The bush member (100) is formed by pressing a raw material without sintering. The bush member (100) has a thickness of 0.3 mm to 0.7 mm. The bush member (100) has a taper (110) inclined to achieve secure coupling between the bush member (100) and the rotating shaft (30) and a curled part (140) formed at the lower end thereof.

## Description

### BACKGROUND

### 1. Field

Embodiments relate to a bush member for a rotating shaft of a washing machine wherein a manufacturing process of the bush member is simplified and improved, a washing machine having the bush member, and a manufacturing method of the bush member and the washing machine.

### 2. Description of the Related Art

Generally, a washing machine includes a tub to contain wash water, a rotary tub rotatably mounted in the tub, a rotating shaft extending from the rotary tub outside the tub, a bearing to rotatably support the rotating shaft, and a drive motor connected to the rotating shaft outside the tub to rotate the rotary tub.

To the rotating shaft may be coupled a bush member to prevent corrosion of the rotating shaft due to contact with water.

Powder is pressurized, molded and sintered into a predetermined shape to manufacture a cylindrical mold. The mold is machined and cut by a lathe to manufacture a bush member, which is forcibly fitted on the rotating shaft.

However, a manufacturing process of the conventional bush member is complicated, with the result that manufacturing costs are increased, and productivity is reduced. Also, the bush member is subject to the sintering process, with the result that the thickness of the bush member is relatively large.

### SUMMARY

It is an aspect to provide a bush member for a rotating shaft of a washing machine wherein a manufacturing process of the bush member is simplified, a washing machine having the bush member, and a manufacturing method of the bush member and the washing machine.

It is another aspect to provide a bush member for a rotating shaft of a washing machine wherein the thickness of the bush member is small, a washing machine having the bush member, and a manufacturing method of the bush member and the washing machine.

It is a further aspect to provide a bush member for a rotating shaft of a washing machine wherein manufacturing costs are reduced and productivity is improved, a washing machine having the bush member, and a manufacturing method of the bush member and the washing machine.

Additional aspects will be set forth in part in the description which follows and, in part, will be apparent from the description, or may be learned by practice of the invention.

In accordance with one aspect, a washing machine includes a cabinet, a rotary tub rotatably provided in the cabinet, a drive motor to rotate the rotary tub, a rotating shaft to transmit drive force from the drive motor to the rotary tub, and a bush member coupled to the rotating shaft to prevent corrosion of the rotating shaft, wherein the bush member is formed by pressing a raw material without sintering.

The bush member may have a thickness of about 0.3 mm to about 0.7 mm.

The bush member may be forcibly fitted on the rotating shaft.

The bush member may be provided at a lower end thereof with a curled part configured to be curled toward a center of the rotating shaft.

The curled part may be formed after the bush member is forcibly fitted on the rotating shaft.

The bush member may include a taper having an inclined section to achieve easy coupling between the bush member and the rotating shaft.

The taper may include a first taper formed at a middle of the bush member and a second taper provided at one end of the first taper.

The first taper may become level to press against the rotating shaft after the bush member is forcibly fitted on the rotating shaft.

The second taper may press against the rotating shaft at an end of the bush member to prevent penetration of moisture.

In accordance with another aspect, a bush member for a rotating shaft of a washing machine, coupled to the rotating shaft to prevent corrosion of the rotating shaft, is formed by pressing a raw material without sintering, thereby simplifying a manufacturing process of the bush member.

The bush member may have a thickness of about 0.3 mm to about 0.7 mm.

The bush member may be forcibly fitted on the rotating shaft.

The bush member may be provided at a lower end thereof with a curled part configured to be curled toward a center of the rotating shaft, and the curled part may be formed after the bush member is forcibly fitted on the rotating shaft.

The bush member may include a taper having an inclined section to achieve easy coupling between the bush member and the rotating shaft.

The taper may include a first taper formed at a middle of the bush member and a second taper provided at one end of the first taper.

The first taper may become level to press against the rotating shaft after the bush member is forcibly fitted on the rotating shaft.

The second taper may press against the rotating shaft at an end of the bush member to prevent penetration of moisture.

In accordance with another aspect, a manufacturing method of a washing machine comprising a rotary tub, a drive motor to rotate the rotary tub, a rotating shaft to transmit drive force from the drive motor to the rotary tub, and a bush member coupled to the rotating shaft to prevent corrosion of the rotating shaft includes forming the bush member by pressing a raw material without sintering and forcibly fitting the bush member onto the rotating shaft.

The bush member may further include curling a lower end of the bush member toward a center of the rotating shaft.

In accordance with a further aspect, a manufacturing method of a bush member for a rotating shaft of a washing machine includes forming a raw material by pressing without sintering, forcibly fitting the pressed material onto the rotating shaft, and curling a lower end of the pressed material toward a center of the rotating shaft.

### BRIEF DESCRIPTION OF THE DRAWINGS

These and/or other aspects will become apparent and more readily appreciated from the following description of the embodiments, taken in conjunction with the accompanying drawings of which:
FIG. 1 is a sectional view schematically illustrating a washing machine according to an embodiment;
FIG. 2 is a perspective view illustrating a rotating shaft and a bush member before the bush member is forcibly fitted on the rotating shaft;
FIG. 3 is a partially cut-away perspective view of the bush member;
FIG. 4A is a side sectional view of the rotating shaft and the bush member before the bush member is forcibly fitted on the rotating shaft;
FIG. 4B is a side sectional view of the rotating shaft and the bush member after the bush member is forcibly fitted on the rotating shaft;
FIG. 5 is an enlarged view illustrating part "A" of FIG. 4B;
FIG. 6 is an enlarged view illustrating part "B" of FIG. 4B; and
FIG. 7 is a flow chart illustrating a manufacturing method of the bush member.

### DETAILED DESCRIPTION

Reference will now be made in detail to the embodiments, examples of which are illustrated in the accompanying drawings, wherein like reference numerals refer to like elements throughout.

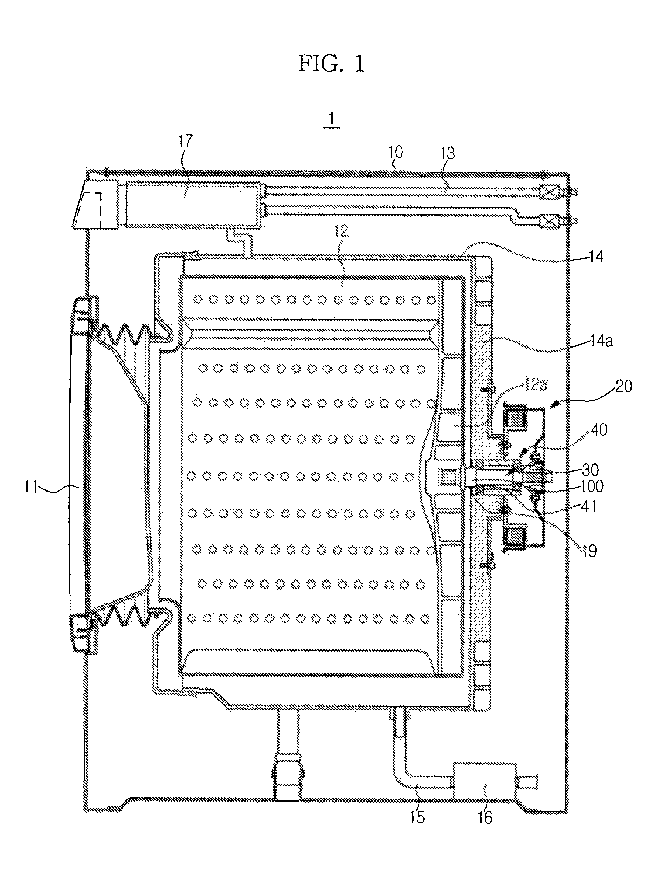

FIG. 1 is a sectional view schematically illustrating a washing machine 1 according to an embodiment.

As shown in FIG. 1, the washing machine 1 includes a cabinet 10 forming the external appearance thereof, a tub 14 mounted in the cabinet 10 to contain wash water, a rotary tub 12 rotatably mounted in the tub 14 to wash laundry, and a door 11 mounted at the front of the cabinet 10 to open and close an opening formed at the front of the cabinet 10.

In the upper part of the cabinet 10 are provided a water supply pipe 13 and a detergent supply unit 17 to supply water and a detergent to the tub 14. In the lower part of the cabinet 10 are mounted a drainage pipe 15 and a drainage pump 16 to discharge wash water from the tub 14.

At the outside rear of the tub 14 is mounted a drive motor 20 to rotate the rotary tub 12 in alternating directions. Between the rotary tub 12 and the drive motor 20 is connected a rotating shaft 30 to transmit drive force from the drive motor 20 to the rotary tub 12.

On the rotating shaft 30 is forcibly fitted a bush member 100 to prevent corrosion of the rotating shaft, which will be described in detail later.

One end of the rotating shaft 30 is fixedly fitted in a flange 12a coupled to the rear of the rotary tub 12, and the other end of the rotating shaft 30 is connected to the drive motor 20 through the rear 14a of the tub 14.

At the rear 14a of the tub 14 is mounted a bearing housing 40 through which the rotating shaft 30 rotatably extends outside the tub 14. The drive motor 20 is coupled to the rear 14a of the tub 14 through the bearing housing 40.

In the bearing housing are mounted bearings 41 which are located at front and rear parts of the rotating shaft 30 to rotatably support the rotating shaft 30. Between the flange 12a of the rotary tub 12 and the bearing housing 40 is provided an oil seal 19 to prevent leakage of wash water.

Hereinafter, a bush member 100 according to an embodiment will be described in detail.

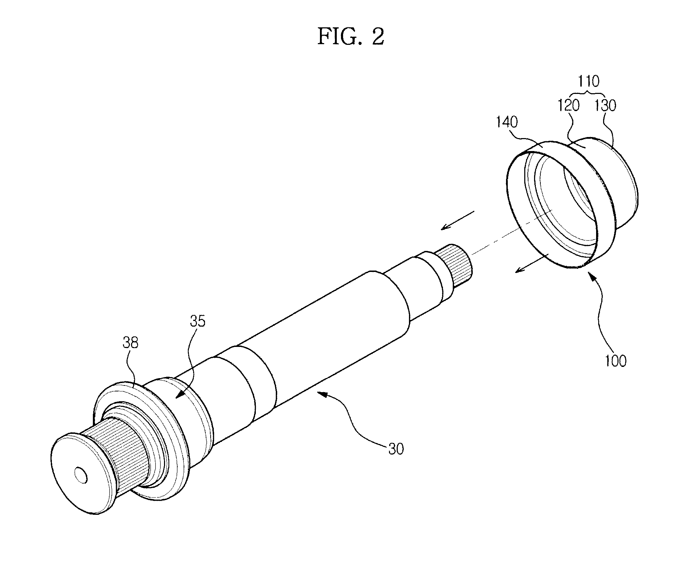

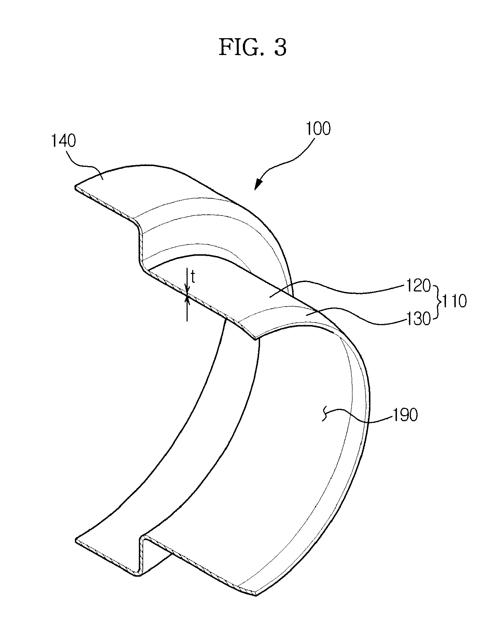

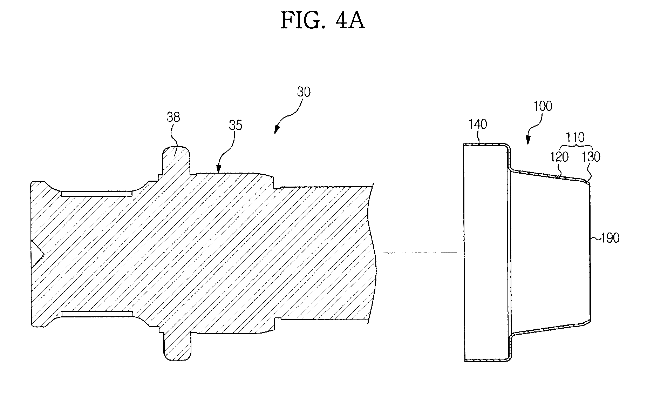

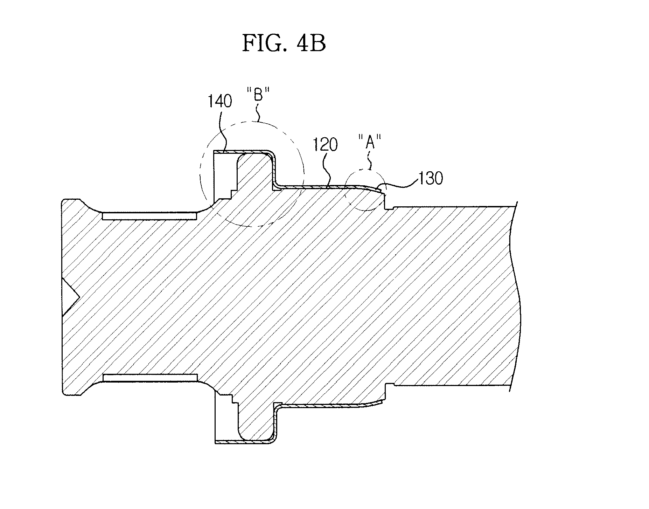

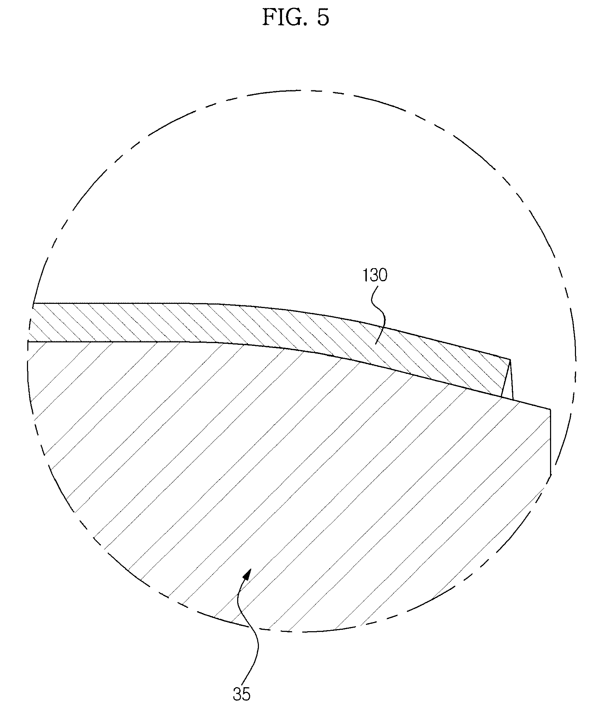

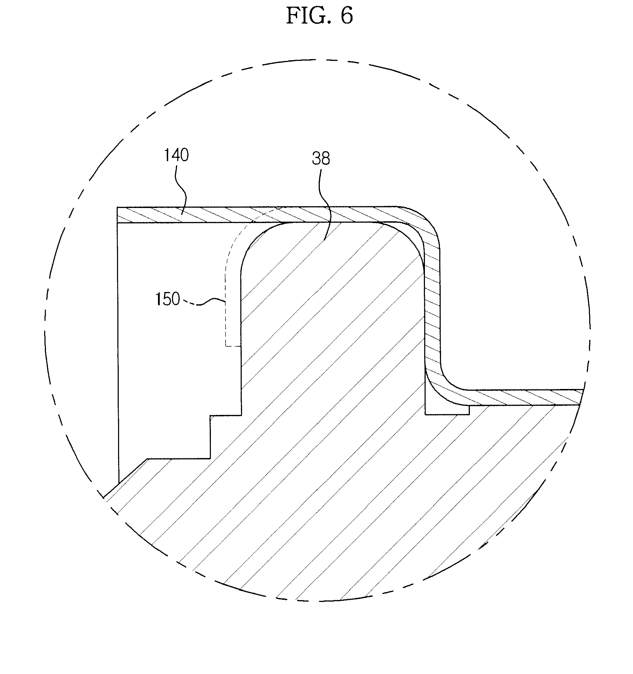

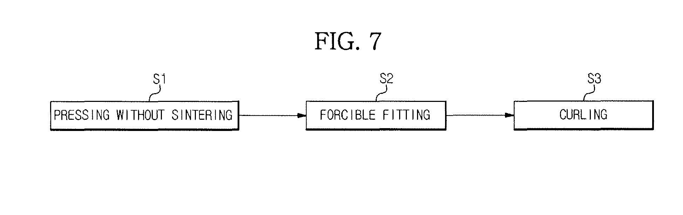

FIG. 2 is a perspective view illustrating the rotating shaft and the bush member before the bush member is forcibly fitted on the rotating shaft. FIG. 3 is a partially cut-away perspective view of the bush member. FIG. 4A is a side sectional view of the rotating shaft and the bush member before the bush member is forcibly fitted on the rotating shaft, and FIG. 4B is a side sectional view of the rotating shaft and the bush member after the bush member is forcibly fitted on the rotating shaft. FIG. 5 is an enlarged view illustrating part "A" of FIG. 4B, and FIG. 6 is an enlarged view illustrating part "B" of FIG. 4B. FIG. 7 is a flow chart illustrating a manufacturing method of the bush member.

As shown in FIG. 2, the bush member 100 is forcibly fitted on the rotating shaft 30 in the direction indicated by arrows.

The rotating shaft 30 is formed in the shape of a long rod. The rotating shaft 30 has a bush fitting part 35 on which the bush member is forcibly fitted. The bush fitting part 35 directly contacts the bush member 100 after the bush member 100 is forcibly fitted on the rotating shaft 30. The bush fitting part 35 has a shape corresponding to that of the bush member 100.

The rotating shaft 30 is made of steel. As a result, the rotating shaft 30 may easily be corroded by moisture. Therefore, the bush member 100 is fitted on the rotating shaft 30 to prevent the rotating shaft 30 from being corroded by wash water.

The bush member 100 is made of a stainless steel to compensate for low corrosion resistance of the rotating shaft 30 made of steel.

The bush member 100 is formed by placing and pressing a sheet of stainless steel. Subsequently, a fitting hole 190 of the bush member 100 is formed by cutting.

The bush member 100 formed by pressing has a shape as shown in FIG. 3.

The bush member 100 may have a thickness of 0.3 mm to 0.7 mm. In this embodiment, the thickness t of the bush member 100 is 0.5 mm.

The bush member 100 having the shape as shown in FIGS. 2 and 3 is forcibly fitted on the rotating shaft 30.

In the related art, stainless steel powder is mixed and poured into a mold where the powder is molded into a cylindrical shape, and the cylindrical mold is sintered in a heating furnace. Outer and inner circumferences of the sintered mold are machined using a lathe to manufacture a bush member, which is forcibly fitted on the rotating shaft.

In this embodiment, on the other hand, the bush member 100 is not subjected to such a sintering process but is manufactured by pressing a sheet of the stainless steel. Therefore, a manufacturing process is simplified.

Since the manufacturing process is simplified, productivity is improved. Also, the sintering process and the lathe machining process are not performed, with the result that manufacturing costs are reduced.

Since the bush member 100 is not subjected to the sintering process, the bush member 100 has a thickness t of 0.3 mm to 0.7 mm, which is less than the conventional bush member.

The bush member 100 before and after the bush member 100 is forcibly fitted on the rotating shaft 30 will be described with reference to FIGS. 4A to 6. The bush member 100 includes a taper 110 having an inclined section to achieve easy coupling between the bush member 100 and the rotating shaft 30.

The taper 110 includes a first taper 120 formed at the middle of the bush member 100 and a second taper 130 provided at one end of the first taper 120. The second taper 130 has a greater inclination than the first taper 120.

Before the bush member 100 is forcibly fitted on the rotating shaft 30, the first taper 120 is inclined toward the center of the fitting hole 190. When the bush member 100 is forcibly fitted on the rotating shaft 30, the first taper 120 becomes level in correspondence to the shape of the bush fitting part 35. As a result, the first taper 120 presses against the rotating shaft 30.

The second taper 130 extends from the end of the first taper 120. After the bush member 100 is forcibly fitted on the rotating shaft 30, the second taper 130 presses against the rotating shaft 30 at the end of the bush member 100 to prevent penetration of moisture.

That is, when the bush member 100 is forcibly fitted on the rotating shaft 30, the taper 110 is widened. As a result, the bush member 100 tightly contacts the rotating shaft 30, and, at the same time, the penetration of moisture into the rotating shaft 30 is perfectly prevented.

After the bush member 100 is forcibly fitted on the rotating shaft 30, a lower end 140 of the bush member 140 is curled toward the center of the rotating shaft 30. As a result, the lower end 140 of the bush member 140 serves as a curled part 150 to surround a fitting protrusion 38 of the bush fitting part 35.

The bush member 100 is securely fixed to the rotating shaft 30 by the curled part 150. The curled part 150 prevents the bush member 100 from being separated from the rotating shaft 30 during high-speed rotation of the rotating shaft 30. Also, the bush member 100 is tightly coupled to the rotating shaft 30 by the curled part 150.

Specifically, the bush member 100 is formed by pressing a sheet of stainless steel without a sintering process (S1), forcibly fitting the pressed sheet onto the rotating shaft 30 (S2), and curling the lower end of the pressed sheet toward the center of the rotating shaft 30 (S3) (see FIG. 7).

In the manufacturing method of the bush member 100 as described above, the manufacturing process is more simplified than the conventional manufacturing method including the sintering process, thereby improving productivity and reducing manufacturing costs. Also, the sintering process is omitted, with the result that the thickness of the bush member 100 becomes relatively small, thereby further reducing manufacturing costs.

Hereinafter, the operation of a washing machine 1 according to an embodiment will be described.

When a user puts a detergent into the detergent supply unit 17 and operates the washing machine 1, water is supplied into the washing machine 1 through the water supply pipe 13. A controller (not shown) transmits an operation signal to the drive motor 20. Water mixed with a detergent while passing through the detergent supply unit 17, i.e., wash water, is introduced into the tub 14. Drive force from the drive motor 20 is transmitted to the rotary tub 12 via the rotating shaft 30. As a result, the rotary tub 12 is rotated to wash laundry placed therein.

At this time, the wash water in the tub 14 may contact the rotating shaft 30. However, the bush member 100 is fitted on the rotating shaft 30, and therefore, the penetration of moisture into the rotating shaft 30 is prevented. The bush member 100 is manufactured by a simple manufacturing method including no sintering process. Consequently, the thickness of the bush member 100 is small, with the result that manufacturing costs are reduced.

As is apparent from the above description, the bush member is manufactured by pressing without sintering, and therefore, the manufacturing process of the bush member is simplified.

Also, the thickness of the bush member is small.

In addition, manufacturing costs are reduced, and productivity is improved.

Although a few embodiments have been shown and described, it would be appreciated by those skilled in the art that changes may be made in these embodiments without departing from the principles and spirit of the invention, the scope of which is defined in the claims and their equivalents.

## Claims

1. A washing machine comprising:
a cabinet;
a rotary tub rotatably provided in the cabinet;
a drive motor to rotate the rotary tub;
a rotating shaft to transmit drive force from the drive motor to the rotary tub; and
a bush member coupled to the rotating shaft to prevent corrosion of the rotating shaft,
wherein
the bush member is formed by pressing a raw material without sintering.

2. The washing machine according to claim 1, wherein the bush member has a thickness of about 0.3 mm to about 0.7 mm.

3. The washing machine according to claim 1, wherein the bush member is forcibly fitted on the rotating shaft.

4. The washing machine according to claim 3, wherein the bush member is provided at a lower end thereof with a curled part configured to be curled toward a center of the rotating shaft.

5. The washing machine according to claim 4, wherein the curled part is formed after the bush member is forcibly fitted on the rotating shaft.

6. The washing machine according to claim 3, wherein the bush member comprises a taper having an inclined section to achieve easy coupling between the bush member and the rotating shaft.

7. The washing machine according to claim 6, wherein the taper comprises a first taper formed at a middle of the bush member and a second taper provided at one end of the first taper.

8. The washing machine according to claim 7, wherein the first taper becomes level to press against the rotating shaft after the bush member is forcibly fitted on the rotating shaft.

9. The washing machine according to claim 7, wherein the second taper presses against the rotating shaft at an end of the bush member to prevent penetration of moisture.

10. A bush member for a rotating shaft of a washing machine, coupled to the rotating shaft to prevent corrosion of the rotating shaft, wherein
the bush member is formed by pressing a raw material without sintering.

11. The bush member according to claim 10, wherein the bush member has a thickness of about 0.3 mm to about 0.7 mm.

12. The bush member according to claim 10, wherein the bush member is forcibly fitted on the rotating shaft.

13. The bush member according to claim 12, wherein
the bush member is provided at a lower end thereof with a curled part configured to be curled toward a center of the rotating shaft, and
the curled part is formed after the bush member is forcibly fitted on the rotating shaft.

14. A manufacturing method of a washing machine comprising a rotary tub, a drive motor to rotate the rotary tub, a rotating shaft to transmit drive force from the drive motor to the rotary tub, and a bush member coupled to the rotating shaft to prevent corrosion of the rotating shaft, the manufacturing method comprising:
forming the bush member by pressing a raw material without sintering; and
forcibly fitting the bush member onto the rotating shaft.

15. The bush member according to claim 14, further comprising curling a lower end of the bush member toward a center of the rotating shaft.
